(19) Europäisches Patentamt
European Patent Office
Office européen des brevets

(11) **EP 3 245 784 B1**

(12) **FASCICULE DE BREVET EUROPEEN**

(45) Date de publication et mention
de la délivrance du brevet:
**22.09.2021 Bulletin 2021/38**

(21) Numéro de dépôt: **16700273.2**

(22) Date de dépôt: **11.01.2016**

(51) Int Cl.:
*H04N 5/232* (2006.01)    *H04N 1/387* (2006.01)
*G01N 21/88* (2006.01)    *H04N 3/14* (2006.01)

(86) Numéro de dépôt international:
**PCT/EP2016/050377**

(87) Numéro de publication internationale:
**WO 2016/113219 (21.07.2016 Gazette 2016/29)**

(54) **RECONSTITUTION DE SCÈNE PAR ASSEMBLAGE D'IMAGES**

SZENENREKONSTRUKTION DURCH DIE ZUSAMMENSETZUNG VON BILDERN

SCENE RECONSTRUCTION BY ASSEMBLING IMAGES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.01.2015 FR 1550371**

(43) Date de publication de la demande:
**22.11.2017 Bulletin 2017/47**

(73) Titulaire: **FRAMATOME**
**92400 Courbevoie (FR)**

(72) Inventeur: **TAGLIONE, Matthieu**
**21000 Dijon (FR)**

(74) Mandataire: **Lavoix**
**2, place d'Estienne d'Orves**
**75441 Paris Cedex 09 (FR)**

(56) Documents cités:
**EP-A2- 1 530 360          JP-A- H11 326 580
JP-A- 2005 030 961      US-A1- 2001 019 636
US-B1- 6 236 811**

**Description**

La présente invention concerne un procédé d'inspection d'une surface d'un équipement de centrale nucléaire.

L'invention concerne également un dispositif d'inspection d'une surface d'un équipement de centrale nucléaire permettant la réalisation d'un tel procédé.

Des procédés du type précité sont connus, notamment du document US 2010/0129059. Le procédé décrit une reconstitution d'une image de la surface à partir d'une vidéo pour faciliter l'inspection d'une cuve nucléaire.

Cependant, le procédé utilise le principe des points fiduciaires, c'est-à-dire de points facilement reconnaissables, qui sont repérés pour permettre de reconstituer l'image. Le traitement de l'image est donc complexe avec cette méthode.

Une autre solution consiste en l'utilisation d'un capteur linéaire qui est balayé devant la surface à analyser, comme dans WO 2013/007951 pour l'inspection d'emballages. Cependant, ce procédé est long pour les grandes surfaces car une seule ligne est acquise par prise. De plus, les capteurs linéaires commercialisés aujourd'hui sont très volumineux, et il est donc impossible d'inspecter des surfaces dans des volumes restreints par ce procédé.

Le document JP H11 326580 A décrit un dispositif d'inspection capable de détecter automatiquement les défauts d'images acquises en continu et de détecter l'emplacement des défauts dans une forme stéréoscopique plus détaillée.

Le document US 6 236 811 B1 décrit un appareil adapté pour acquérir une séquence de portions d'une image comprenant une caméra agencée fixement et un dispositif de déplacement de l'image dans une série de localisations prédéterminées.

Un but de l'invention est donc de fournir un procédé simple et rapide permettant d'inspecter une surface d'un équipement de centrale nucléaire.

A cet effet, l'invention a pour objet un procédé du type précité selon la revendication 1.

L'utilisation d'une caméra matricielle permet d'acquérir plusieurs lignes à la fois, ce qui permet une acquisition plus rapide. Pour une inspection d'une durée égale à celle réalisée avec un capteur linéaire, la vitesse de déplacement est donc moindre et l'image est ainsi plus précise.

Selon des modes de réalisation particuliers de l'invention, le procédé présente l'une ou plusieurs caractéristiques des revendications 2 à 8, prise(s) isolément ou suivant toute(s) combinaison(s) telle(s) que revendiquée(s);

D'autres caractéristiques et avantages de l'invention apparaîtront à la lecture de la description qui va suivre, donnée uniquement à titre d'exemple et faite en se référant aux dessins annexés, sur lesquels :

- la figure 1 est une vue schématique des étapes d'un mode de réalisation du procédé de l'invention,
- la figure 2 est une vue schématique de certaines étapes d'un autre mode de réalisation du procédé de l'invention,
- les figures 3 et 4 sont des schémas du mouvement de balayage du champ d'acquisition de la caméra d'après différents modes de réalisation.

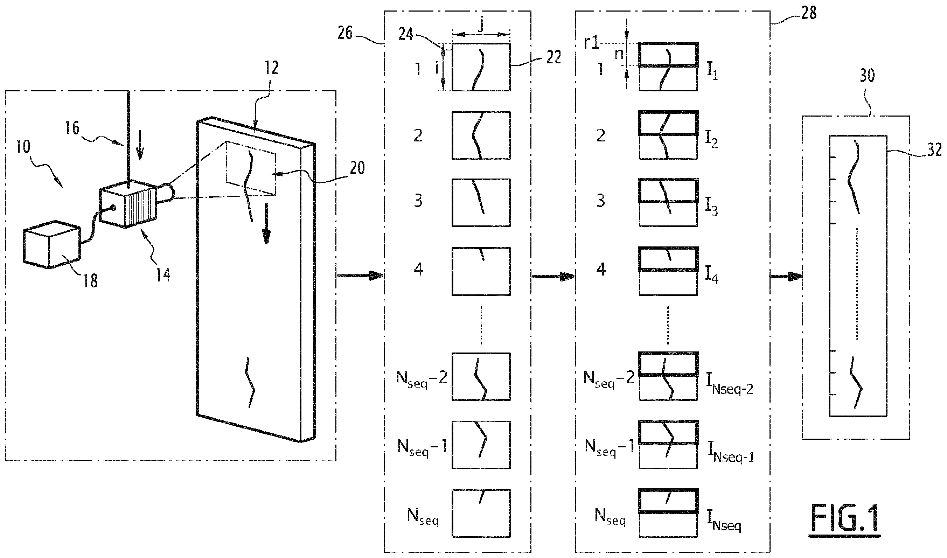

Un dispositif 10 d'inspection d'une surface à analyser 12 d'un équipement de centrale nucléaire est représenté à la figure 1. Il comporte notamment une caméra matricielle 14, un dispositif de balayage 16 et un calculateur 18.

La surface 12 est, par exemple, tout ou partie de la surface interne des pénétrations de fond de cuve, tout ou partie de la surface externe des pénétrations de fond de cuve, tout ou partie du revêtement de la cuve, tout ou partie du couvercle de la cuve, tout ou partie de la surface interne et/ou externe d'un tube d'un générateur de vapeur ou tout autre équipement sous pression de la centrale nucléaire. La centrale nucléaire est par exemple en fabrication ou en maintenance.

La caméra matricielle 14 possède un champ d'acquisition 20 et est propre à acquérir plusieurs images 22 d'une partie de la surface 12 coïncidant avec le champ 20.

L'image 22 acquise par la caméra est constituée d'une matrice de pixels de dimension i*j, avec i le nombre de lignes horizontales et j le nombre de lignes verticales de la matrice, avec i strictement supérieur à 1. Le pixel est, par exemple, un rectangle de taille notée h*L, avec h sa hauteur et L sa largeur. La hauteur h peut être égale à la largeur L. On appelle rang la numérotation des lignes horizontales de haut en bas, avec la ligne supérieure 24 numérotée 1.

Le dispositif de balayage 16 est relié à la caméra 14 et permet de balayer le champ d'acquisition 20 de la caméra 14 le long de la surface suivant un plan d'inspection. Le champ d'acquisition 20 se déplace par rapport à la centrale nucléaire, tandis que la surface à inspecter 12 est immobile par rapport à la centrale nucléaire. La caméra 14 est par exemple déplacée à une vitesse donnée par rapport à la surface à analyser 12. Dans une autre variante, la caméra 14 reste immobile par rapport à la surface à analyser 12 et seul son champ d'acquisition 20 parcourt la surface à analyser. Dans ce cas, le champ d'acquisition 20 est par exemple déplacé à l'aide d'un miroir inclinable, l'objectif de la caméra visant en permanence le miroir.

La vitesse du champ d'acquisition 20 par rapport à la surface à analyser 12 est dans la suite notée v. Dans un mode de réalisation, la vitesse du champ d'acquisition est connue exactement à tout instant. Dans un autre mode de réalisation, la vitesse n'est pas connue exactement, mais est située dans une plage de valeurs connue.

Dans un mode de réalisation, cette vitesse est sensiblement constante pendant le balayage de la surface 12. Selon une variante, cette vitesse est sensiblement constante, en dehors des changements de direction et autre déplacements du champ d'acquisition 20 par rapport à la surface à analyser 12 au cours desquels aucune image n'est interprétée. Dans un autre mode de réalisation, la vitesse est variable, par exemple, s'il n'est pas nécessaire de dimensionner les indications de défauts éventuels détectés dans le sens du déplacement.

Pour la suite de la description, le champ d'acquisition 20 se déplace par rapport à la surface à analyser 12 du haut de la surface à analyser 12 au bas de celle-ci, à vitesse sensiblement constante comprise entre 0,1 et 2,0 mm/s. Toute ligne horizontale est appelée ligne par la suite, et toute ligne verticale est appelée colonne. Il est cependant entendu que le procédé décrit ici s'applique à tout déplacement horizontal ou vertical, ainsi qu'à toute combinaison des deux, et que la notion de ligne est à la fois horizontale et verticale.

Le champ d'acquisition 20 se déplace ici de haut en bas. Des images sont acquises à une fréquence d'acquisition notée f. Par la suite, on prendra f constante et comprise entre 0,01 Hz et 10 kHz, par exemple entre 1 et 100 Hz, et par exemple égale à 25 Hz. D'après une autre variante, le procédé peut être adapté pour fonctionner avec f non constant.

En référence à la figure 1, on va maintenant décrire le procédé de reconstitution d'une image à partir d'une séquence d'images par le calculateur 18.

L'ensemble des images acquises forme une séquence 26. Le nombre d'images dans la séquence est noté Nseq.

A l'étape 28, un nombre n de lignes est extrait de la première image acquise, formant un premier ensemble de lignes l1. Ce nombre n est compris entre 2 et le nombre de lignes de l'image acquise, noté i. Par la suite, on considère que ces lignes sont continues et situées à la suite les unes des autres, c'est-à-dire contiguës. Ainsi, on extrait n lignes de l'image allant du rang r1 au rang r1+(n-1), avec r1 devant être compris entre 1 et i-n+1 compris.

On extrait ensuite sur chaque image acquise les lignes situées au même rang que précédemment, c'est-à-dire les lignes situées du rang r1 au rang r1+(n-1). L'ensemble des lignes extraites forme des ensembles l1, l2 ... $l_{Nseq}$.

A l'étape 30, les ensembles des lignes extraites l1, l2,... $l_{Nseq}$ sont juxtaposés pour reconstituer une image finale 32. L'image finale 32 est par exemple de résolution identique à celles des images acquises 22, c'est-à-dire que ses pixels sont également de taille h*L.

Pour que l'image finale 32 couvre toute la surface balayée sans interruption, les paramètres doivent être choisis tels que : n = v / (f*h), avec n le nombre de lignes extraites par image, v la vitesse du champ d'acquisition par rapport à la surface, f la fréquence d'acquisition et h la hauteur d'un pixel (et par conséquent d'une ligne).

L'image finale 32 ainsi formée est une reconstitution de l'ensemble de la surface balayée par le champ d'acquisition 20, en dehors des r1-1 premières lignes et des i-r1+n-1 dernières lignes.

D'après l'invention, à l'étape 34, on extrait à nouveau n lignes, ici toujours continues et contiguës, de la première image de la séquence, formant un deuxième ensemble de lignes J1. Les lignes extraites vont du rang r2 au rang r2+(n-1), avec r2 devant être compris entre 1 et i-n+1 compris et tel que les lignes du second ensemble J1 soient différentes des lignes du premier ensemble l1.

On extrait ensuite sur chaque image acquise les lignes situées au même rang que précédemment, c'est-à-dire les lignes situées du rang r2 au rang r2+(n-1). L'ensemble des lignes extraites forme des ensembles J1, J2 ... $J_{Nseq}$. Chaque ensemble J1, J2... $J_{Nseq}$ est ainsi différent de l'ensemble associé l1, l2... $l_{Nseq}$.

A l'étape 36, les ensembles des lignes extraites J1, J2... $J_{Nseq}$ sont juxtaposés pour reconstituer une deuxième image finale 38. La deuxième image finale 38 est par exemple de résolution identique que la première image finale 32.

L'image finale 38 ainsi formée est une reconstitution de l'ensemble de la surface balayée par le champ d'acquisition 20, en dehors des r2-1 premières lignes et des i-r2+n-1 dernières lignes.

La deuxième image finale 38 est différente de la première image finale 32 puisque chaque ensemble est différent. La deuxième image finale 38 représente la surface à analyser 12 avec un léger décalage, égal à |r1-r2|, par rapport à la première image finale 32. La prise de vue étant différente pour les deux images, cette technique peut permettre de mettre en avant des détails, qui sont plus ou moins visibles selon divers paramètres dont l'angle de la prise de vue ou l'éclairage. Cette technique permet d'obtenir deux points de vue à partir desquels on peut par exemple reconstruire une vue en trois dimensions de la surface à analyser 12.

En variante, le procédé est réitéré un nombre voulu de fois, permettant d'obtenir ce nombre voulu d'images finales avec des prises de vue différentes, sur lesquelles sont ensuite détectées des indications de défauts.

Pour balayer l'ensemble de la surface à analyser 12, il convient de réitérer l'ensemble du procédé pour la surface à analyser en la balayant avec une série de mouvements verticaux et/ou horizontaux.

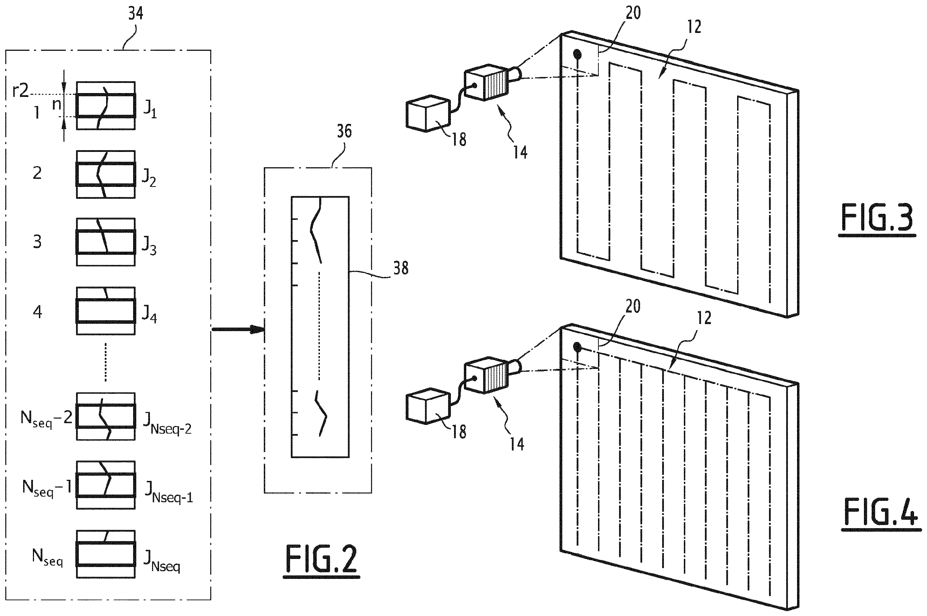

Aux figures 3 et 4 sont représentées deux possibilités du mouvement de balayage du champ d'acquisition 20 de la caméra 14 par rapport à la surface à analyser 12. La représentation est plane, mais la surface peut être cylindrique ou de forme particulière. Le mouvement de balayage est décrit d'après un parcours particulier, mais celui-ci peut être modifié, par exemple en balayant la surface dans l'autre sens, de droite à gauche ou en acquérant les images de bas en haut.

Sur la figure 3, un déplacement en créneau est représenté.

Le centre du champ d'acquisition 20 de la caméra est placé à un point initial 40. Le bord gauche du champ d'acquisition 20 doit être sensiblement au niveau du bord gauche de la surface à analyser. La ligne de rang r1 ou r2 du champ d'acquisition 20 doit être sensiblement au niveau du bord supérieur de la surface à analyser.

Le champ d'acquisition 20 de la caméra 14 est alors déplacé de haut en bas à vitesse constante et le calculateur 18 acquiert des images. Lorsque la ligne de rang égal à r1+n-1 ou r2+n-1 du champ d'acquisition 20 est sensiblement au niveau du bord inférieur de la surface à analyser, le calculateur 18 n'acquiert plus d'images, ou celles-ci ne seront pas exploitées lors du traitement de la séquence d'images, et le champ d'acquisition 20 est décalé de gauche à droite par rapport à la surface d'une distance égale à j*L avec j le nombre de colonnes d'une image et L la largeur d'un pixel, donc d'une colonne.

Puis, le champ d'acquisition 20 de la caméra 14 est déplacé de bas en haut à vitesse constante et le calculateur 18 acquiert à nouveau des images. Lorsque le centre du champ d'acquisition 20 est sensiblement à la même hauteur que le point initial 40, le calculateur 18 n'acquiert plus d'images, ou celles-ci ne seront pas exploitées lors du traitement de la séquence d'images, et le champ d'acquisition 20 est décalé de gauche à droite par rapport à la surface d'une distance égale à j*L avec j le nombre de colonnes d'une image et L la largeur d'un pixel.

L'ensemble du mouvement est répété jusqu'à avoir balayé l'ensemble de la surface à analyser 12.

Le procédé pour reconstruire une image de la surface est réalisé dans un premier temps pour chaque séquence d'acquisition liée à une même descente ou une même montée du champ d'acquisition 20, puis l'ensemble des images ainsi obtenues sont mises bout à bout de gauche à droite pour reformer l'ensemble de l'image.

Sur la figure 4, un déplacement en peigne est représenté.

Le centre du champ d'acquisition 20 de la caméra est placé à un point initial 40, similaire à celui utilisé pour le déplacement en créneau.

Le champ d'acquisition 20 de la caméra 14 est ensuite déplacé de haut en bas à vitesse constante et le calculateur 18 acquiert des images. Lorsque la ligne de rang égal à r1+n-1 ou r2+n-1 du champ d'acquisition 20 est sensiblement au niveau du bord inférieur de la surface à analyser, le calculateur 18 n'acquiert plus d'images, ou celles-ci ne seront pas exploitées lors du traitement de la séquence d'images. Le champ d'acquisition 20 est alors déplacé de bas en haut, tel que son centre soit à la même hauteur que le point initial 40, puis le champ d'acquisition 20 est décalé d'une distance sensiblement égale à j*L vers la droite.

L'ensemble du mouvement est répété jusqu'à avoir balayé l'ensemble de la surface à analyser 12.

Le procédé pour reconstruire une image de la surface est réalisé dans un premier temps pour chaque séquence d'acquisition liée à une même descente du champ d'acquisition 20, puis l'ensemble des images ainsi obtenues sont mises bout à bout de gauche à droite pour reformer l'ensemble de l'image.

D'autres possibilités de mouvement de balayage du champ d'acquisition 20 de la caméra 14 sur la surface 12 sont envisageables. Par exemple, en variante, dans le cas d'un élément cylindrique à analyser, le champ d'acquisition 20 de la caméra est déplacé hélicoïdalement sur la surface 12. Dans certains cas, cela fournit une image finale déformée par rapport à la réalité, qui permet néanmoins d'obtenir des informations par rapport aux indications de défauts.

Une autre possibilité dans le cas d'un élément cylindrique à analyser consiste à faire un tour (intérieur ou extérieur selon ce qui doit être observé) de l'élément cylindrique en acquérant des images de la surface de l'élément cylindrique et, une fois revenu à une partie de la surface déjà acquise, de se déplacer selon l'axe de l'élément cylindrique et de recommencer. Lorsque le champ d'acquisition est tel que les lignes des images acquises sont suivant l'axe de l'élément cylindrique, alors des colonnes sont extraites de chaque image pour construire l'image finale.

On obtient ainsi une image finale de l'ensemble de la surface à analyser 12. Un opérateur peut alors facilement rechercher des indications de défauts éventuels sur l'image finale. Si l'opérateur ne dispose que d'une vidéo de l'ensemble des images acquises, il doit réaliser de nombreux allers-retours dans la vidéo afin de pouvoir visionner les indications de défauts entières, puisque deux zones adjacentes ne sont pas nécessairement acquises l'une à la suite de l'autre.

**Revendications**

1. Procédé d'inspection d'une surface (12) d'un équipement de centrale nucléaire, le procédé comprenant les étapes suivantes :

   - balayer la surface (12) avec un champ d'acquisition (20) d'une caméra matricielle (14), le champ d'acquisition (20) se déplaçant par rapport à la surface (12) à une vitesse de déplacement ;
   - acquérir à l'aide de la caméra matricielle (14) une séquence (26) d'images (22) du champ d'acquisition (20), la séquence (26) étant acquise avec une fréquence d'acquisition, chaque image (22) comportant un premier nombre (i) de lignes de pixels; le procédé étant **caractérisé en ce qu'**il comprend également les étapes suivantes:

      - extraire de la première image acquise (22) un premier ensemble (l1) de lignes contiguës, le premier ensemble comprenant un second nombre (n) de lignes continues de pixels, les lignes extraites allant d'un rang r1 à un rang r1 + (n-1), le rang r1 étant compris entre 1 et i-n+1 et le second nombre (n) étant compris entre 2 et le premier nombre et étant tel que $n = \dfrac{v}{f*h}$ avec n représentant le second nombre, h représentant la hauteur d'un pixel, v représentant la vitesse de déplacement et f représentant la fréquence d'acquisition ;

- extraire, sur chaque image de la séquence (26) acquise après la première image acquise, un premier ensemble respectif, le premier ensemble respectif étant formé des lignes situées du rang r1 au rang r1 + (n-1) ;
- constituer une première image finale (32) de la surface (12) en juxtaposant les premiers ensembles de lignes extraites de chaque image (22), l'image finale (32) couvrant toute la surface (12) sans interruption;
- extraire de la première image acquise (22) un second ensemble de lignes contiguës, le second ensemble étant formé du second nombre de lignes continues de pixels, les lignes extraites allant d'un rang r2 à un rang r2 + (n-1), le rang r2 étant compris entre 1 et i-n+1 et les lignes du second ensemble étant différentes des lignes du premier ensemble;
- extraire, sur chaque image de la séquence (26) acquise après la première image acquise, un second ensemble respectif, le second ensemble respectif étant formé des lignes situées du rang r2 au rang r2 + (n-1); et
- constituer une deuxième image finale (38) de la surface (12) en juxtaposant les seconds ensembles de lignes extraites de chaque image (22).

2. Procédé selon la revendication 1, **caractérisé en ce que** le procédé comprend, en outre, une étape de recherche d'indications présentes sur la surface (12) sur l'image finale (32) de la surface (12).

3. Procédé selon l'une quelconque des revendications précédentes, **caractérisé en ce qu'**au cours du procédé, le champ d'acquisition (20) se déplace par rapport à la centrale nucléaire, tandis que la surface à inspecter (12) est immobile par rapport à la centrale nucléaire.

4. Procédé selon l'une quelconque des revendications précédentes, **caractérisé en ce que** la fréquence d'acquisition soit comprise entre 0,1 Hz et 10 kHz.

5. Procédé selon l'une quelconque des revendications précédentes, **caractérisé en ce que** le champ d'acquisition (20) de la caméra (14) se déplace par rapport à la surface à analyser (12) à une vitesse comprise entre 0,1 et 2 mm/s.

6. Procédé selon l'une quelconque des revendications précédentes, **caractérisé en ce que** le champ d'acquisition (20) de la caméra (14) se déplace :

   - de haut en bas par rapport à la surface à analyser (12) avec acquisition d'images (22),
   - une fois en bas de la surface, vers la gauche ou vers la droite sans acquisition d'image,
   - puis de bas en haut jusqu'au haut de la surface à analyser (12) avec acquisition d'images (22),
   - puis vers le même côté que précédemment sans acquisition d'image,

   le procédé se réitérant jusqu'à ce que l'ensemble de la surface à analyser (12) ait été acquise.

7. Procédé selon l'une quelconque des revendications 1 à 5, **caractérisé en ce que** le champ d'acquisition (20) de la caméra (14) se déplace :

   - de haut en bas par rapport à la surface (12) à analyser avec acquisition d'images (22),
   - et une fois en bas de la surface (12), de bas en haut jusqu'au haut de la surface à analyser (12) sans acquisition d'image et vers la gauche ou vers la droite,

   le procédé se réitérant jusqu'à ce que l'ensemble de la surface à analyser (12) ait été acquise.

8. Procédé selon l'une quelconque des revendications précédentes, **caractérisé en ce que** la surface à analyser (12) est l'intérieur et/ou l'extérieur des pénétrations de fond de cuve d'un générateur de vapeur, le revêtement de la cuve, le couvercle de la cuve ou tout autre équipement sous pression de centrale nucléaire, au cours de sa fabrication ou de sa maintenance.

**Patentansprüche**

1. Verfahren zur Inspektion einer Fläche (12) einer Kernkraftwerksausrüstung, wobei das Verfahren die folgenden Schritte aufweist:

   - Abtasten der Fläche (12) mit einem Erfassungsfeld (20) einer Matrixkamera (14), wobei sich das Erfassungsfeld (20) bezüglich zur Fläche (12) mit einer Bewegungsgeschwindigkeit bewegt,
   - Erfassen, mit Hilfe der Matrixkamera (14), von einer Sequenz (26) von Bildern (22) des Erfassungsfeldes (20), wobei die Sequenz (26) mit einer Erfassungsfrequenz erfasst wird, wobei jedes Bild (22) eine erste Anzahl (i) von Pixelzeilen aufweist, wobei das Verfahren **dadurch gekennzeichnet ist, dass** es gleichermaßen die folgenden Schritte aufweist:

- Extrahieren einer ersten Gruppe (l1) von aneinandergrenzenden Zeilen aus dem ersten erfassten Bild (22), wobei die erste Gruppe eine zweite Anzahl (n) von kontinuierlichen Zeilen von Pixeln aufweist, wobei die extrahierten Zeilen von einem Rang r1 bis zu einem Rang r1 + (n-1) reichen, wobei der Rang r1 zwischen 1 und i-n+1 liegt, und wobei die zweite Anzahl (n) zwischen 2 und der ersten Anzahl liegt und derart ist, dass

$$n = \frac{v}{f*h}$$ , wobei n die zweite Anzahl darstellt, h die Höhe eines Pixels darstellt, v die Bewegungsgeschwindigkeit darstellt und f die Erfassungsfrequenz darstellt,

- Extrahieren von einer jeweiligen ersten Gruppe in jedem nach dem ersten erfassten Bild erfassten Bild der Sequenz (26), wobei die jeweilige erste Gruppe aus den Zeilen gebildet ist, welche sich vom Rang r1 bis zum Rang r1 + (n-1) befinden,

- Bilden eines ersten finalen Bildes (32) der Fläche (12) mittels Aneinanderreihens der aus jedem Bild (22) extrahierten ersten Gruppen von Zeilen, wobei das finale Bild (32) die gesamte Fläche (12) ohne Unterbrechung abdeckt,

- Extrahieren einer zweiten Gruppe von aneinandergrenzenden Zeilen aus dem ersten erfassten Bild (22), wobei die zweite Gruppe aus der zweiten Anzahl von kontinuierlichen Zeilen von Pixeln gebildet ist, wobei die extrahierten Zeilen von einem Rang r2 bis zu einem Rang r2 + (n-1) reichen, wobei der Rang r2 zwischen 1 und i-n+1 liegt, und wobei die Zeilen der zweiten Gruppe verschieden sind von den Zeilen der ersten Gruppe,

- Extrahieren einer jeweiligen zweiten Gruppe in jedem nach dem ersten erfassten Bild erfassten Bild der Sequenz (26), wobei die jeweilige zweite Gruppe aus den Zeilen gebildet ist, welche sich vom Rang r2 bis zum Rang r2 + (n-1) befinden, und

- Erzeugen eines zweiten finalen Bildes (38) der Fläche (12) mittels Aneinanderreihens der aus jedem Bild (22) extrahierten zweiten Gruppen von Zeilen.

2.   Verfahren gemäß Anspruch 1, **dadurch gekenn-**

**zeichnet, dass** das Verfahren ferner aufweist einen Schritt des Suchens nach auf der Fläche (12) vorhandenen Indikationen auf dem finalen Bild (32) der Fläche (12).

3.   Verfahren gemäß irgendeinem der vorherigen Ansprüche, **dadurch gekennzeichnet, dass** sich während des Verfahrens das Erfassungsfeld (20) bezüglich des Kernkraftwerks bewegt, während die zu inspizierende Fläche (12) bezüglich des Kernkraftwerks unbeweglich ist.

4.   Verfahren gemäß irgendeinem der vorherigen Ansprüche, **dadurch gekennzeichnet, dass** die Erfassungsfrequenz zwischen 0,1 Hz und 10 kHz liegt.

5.   Verfahren gemäß irgendeinem der vorherigen Ansprüche, **dadurch gekennzeichnet, dass** sich das Erfassungsfeld (20) der Kamera (14) bezüglich der zu analysierenden Fläche (12) mit einer Geschwindigkeit bewegt, welche zwischen 0,1 und 2 mm/s liegt.

6.   Verfahren gemäß irgendeinem der vorherigen Ansprüche, **dadurch gekennzeichnet, dass** sich das Erfassungsfeld (20) der Kamera (14) bewegt:

- von oben nach unten bezüglich der zu analysierenden Fläche (12) mit der Erfassung von Bildern (22),
- einmal unten an der Fläche, nach links oder nach rechts ohne die Erfassung eines Bildes,
- dann von unten nach oben bis zur Höhe der zu analysierenden Fläche (12) mit der Erfassung von Bildern (22),
- dann zur gleichen Seite wie zuvor ohne die Erfassung eines Bildes,

wobei sich das Verfahren wiederholt, bis die Gesamtheit der zu analysierenden Fläche (12) erfasst wurde.

7.   Verfahren gemäß irgendeinem der Ansprüche 1 bis 5, **dadurch gekennzeichnet, dass** das Erfassungsfeld (20) der Kamera (14) sich bewegt:

- von oben nach unten bezüglich der zu analysierenden Fläche (12) mit der Erfassung von Bildern (22),
- und einmal unten an der Fläche (12), von unten nach oben bis zur Höhe der zu analysierenden Fläche (12) ohne die Erfassung eines Bildes und nach links oder nach rechts,

wobei sich das Verfahren wiederholt, bis die Gesamtheit der zu analysierenden Fläche (12) erfasst wurde.

8. Verfahren gemäß irgendeinem der vorherigen Ansprüche, **dadurch gekennzeichnet, dass** die zu analysierende Fläche (12) das Innere und/oder das Äußere von Behälterbodendurchdringungen eines Dampferzeugers, die Auskleidung des Behälters, der Deckel des Behälters oder irgendeine andere Kernkraftwerkausrüstung unter Druck ist, während einer Herstellung davon oder einer Wartung davon.

**Claims**

1. A method for inspecting a surface (12) of a piece of nuclear power plant equipment, the method comprising the following steps:

   - scanning the surface (12) with an acquisition field (20) of a matrix array camera (14), the acquisition field (20) moving relative to the surface (12) at a movement speed;
   - acquiring, by means of the matrix array camera (14), a sequence (26) of images (22) of the acquisition field (20), the sequence (26) being acquired with a certain acquisition frequency, each image (22) including a first number of lines of pixels;

   the method being **characterized in that** it further comprises the following steps:

   - extracting, from the first acquired image (22), a first set (11) of contiguous lines, the first set comprising a second number (n) of continuous lines of pixels, the extracted lines going from a rank r1 to a rank r1 + (n-1), rank r1 being between 1 and i-n+1, the second number (n) being between 2 and the first number and being such that $n = \frac{v}{f*h}$. with n the second number, h the height of a pixel, v the movement speed and f the acquisition frequency;
   - extracting, from each image of the sequence (26) acquired after the first acquired image, a respective first set, the respective first set being formed by lines going from rank r1 to rank r1 + (n-1);
   - constituting a first final image (32) of the surface (12) by juxtaposing the first sets of lines extracted from each image (22), the final image (32) covering the entire surface (12) without interruption;
   - extracting, from the first acquired image (22), a second set of contiguous lines, the second set consisting of the second number of continuous lines of pixels, the extracted lines going from a rank r2 to a rank r2 + (n-1), rank r2 being between 1 and i-n+1, the lines of the second set being different from the lines of the first set;
   - extracting, from each image of the sequence (26) acquired after the first acquired image, a respective second set, the respective second set being formed by lines going from rank r2 to rank r2 + (n-1);
   - constituting a second final image (32) of the surface (12) by juxtaposing the second sets of lines extracted from each image (22).

2. The method according to claim 1, **characterized in that** the method further comprises a step for searching for indications present on the surface (12) in the final image (32) of the surface (12).

3. The method according to any one of the preceding claims, **characterized in that** during the method, the acquisition field (20) moves relative to the nuclear power plant, such that the surface to be inspected (12) is immobile relative to the nuclear power plant.

4. The method according to any one of the preceding claims, **characterized in that** the acquisition frequency is comprised between 0.1 Hz and 10 kHz.

5. The method according to any one of the preceding claims, **characterized in that** the acquisition field (20) of the camera (14) moves relative to the surface to be analyzed (12) at a speed comprised between 0.1 and 2 mm/s.

6. The method according to any one of the preceding claims, **characterized in that** the acquisition field (20) of the camera (14) moves:

   - from top to bottom relative to the surface to be analyzed (12) with image acquisition (22),
   - once at the bottom of the surface, to the left or to the right without image acquisition,
   - then from bottom to top to the top of the surface to be analyzed (12) with image acquisition (22),
   - then to the same side as before without image acquisition,

   the method being reiterated until the entire surface to be analyzed (12) has been acquired.

7. The method according to any one of claims 1 to 5, **characterized in that** the acquisition field (20) of the camera (14) moves:

   - from top to bottom relative to the surface (12) to be analyzed with image acquisition (22),
   - and once at the bottom of the surface (12), from bottom to top up to the top of the surface to be analyzed (12) without image acquisition and to the left or to the right,

the method being reiterated until the entire surface to be analyzed (12) has been acquired.

8.　The method according to any one of the preceding claims, **characterized in that** the surface to be analyzed (12) is the inside and/or the outside of the vessel bottom penetrations of a steam generator, the coating of the vessel, the cover of the vessel or any other pressurized nuclear power plant equipment, during its manufacture or maintenance.

FIG.1

FIG.2

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100129059 A
- WO 2013007951 A
- JP H11326580 A
- US 6236811 B1